# EUROPEAN PATENT APPLICATION

(11) **EP 1 375 973 A2**
(43) Date of publication of application: **02.01.2004**
(21) Application number: 03014618.7
(22) Date of filing: 26.06.2003
(51) Int. Cl.: F16H 59/02, F16H 59/10

(54) **Structure for mounting a shift operation device on a vehicle body**

(30) Priority: 28.06.2002 JP 2002189360
(71) Applicant: FUJI JUKOGYO KABUSHIKI KAISHA, Tokyo (JP)
(72) Inventor: Nagasawa, Kunihiro, Fuji Jukogyo Kabushiki Kaisha, Tokyo 160-0023 (JP)
(74) Representative: Sajda, Wolf E., Dipl.-Phys.

(57) **Abstract**

A structure for mounting a shift operation device (11) on a vehicle body comprises a support member (23, 24) having a main part (30) to be fixed to the vehicle body and a molded plastic part (31) to support the shift operation device (11) which is dropped downwardly with the shift operation device (11) when a load larger than that of a predetermined value is applied to the main part (30). Additionally, the main part (30) and the molded plastic part (31) are integrally formed into a single piece configuration, and the shift operation device (11) is mounted on the vehicle body via the support member (23, 24) so that the larger load can break and drop the shift operation device (11).

## Description

### BACKGROUND OF THE INVENTION

The present invention relates to a structure for mounting a shift operation device on a vehicle body, more specifically, to the structure for mounting the shift operation device on the vehicle body with a capability of breaking away.

Vehicles with a shift operation device on an instrument panel beside a steering column or on a center console have increased in number in order to widen a legroom and to reduce movements of his or her eyesight for a passenger.

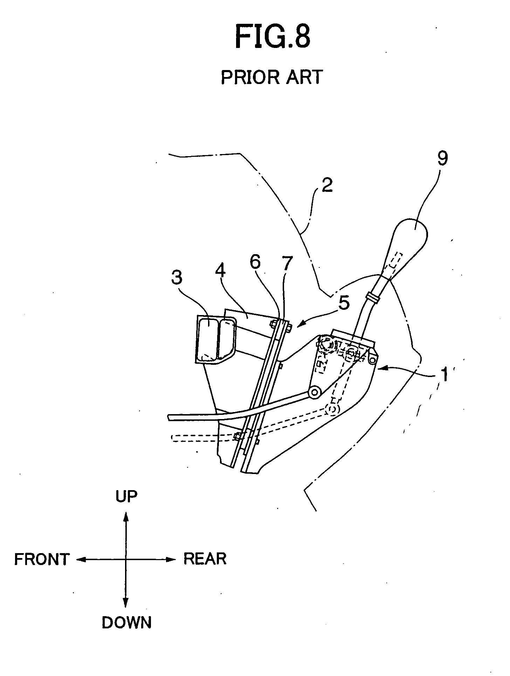

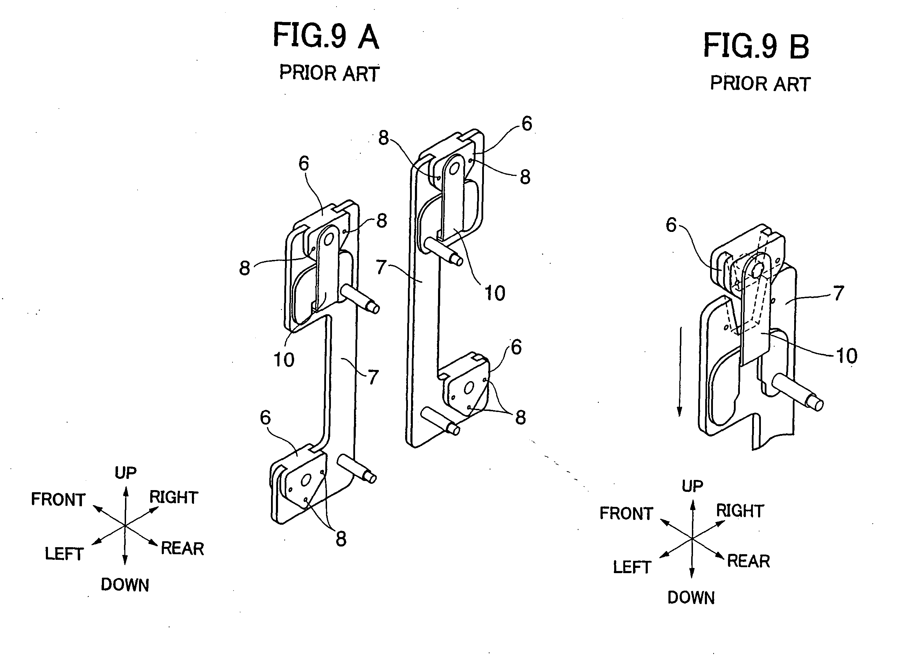

Conventionally such a shift operation device 1 is mounted on a vehicle body, as shown in FIGS. 8 and 9A. More specifically, the shift operation device 1 is secured to a bracket 4 via a support structure 5 on a vehicle body. The bracket 4 extends from a support beam 3 toward a passenger compartment (backward). The support beam 3 is disposed in a position hidden by an instrument panel 2. According to the support structure 5, a predetermined shearing force breaks a plastic pin 8 made from synthetic resin. The plastic pin 8 connects a slider 6 supported by the bracket 4 and a plate 7 supporting the shift operation device 1 to each other. Thus, a certain degree of a crash force applied to a passenger via a select lever 9 of the shift operation device 1 breaks the plastic pin 8 to allow the shift operation device 1 to tear a ripping plate 10 when the device 1 breaks away to fall, thereby absorbing and reducing an impact load of a secondary crash to be applied to the passenger.

However, the conventional structure for mounting a shift operation device on a vehicle body is configured such that the plastic pin 8 cannot break away unless a vehicle crash forces a passenger to be bounced forward and hit against the select lever 9 of the shift operation device 1. Thus, there is a problem that a hit of a passenger on the instrument panel 2 per se cannot break the plastic pin 8 to drop the shift operation device 1.

Since the shift operation device 1 cannot break away, a problem comes up that an impact load of a secondary crash to be applied to the passenger cannot be absorbed or reduced.

Moreover, there is another problem that the shearing force value for breaking the plastic pin 8 and a breaking force value for tearing the ripping plate 10 should be set in a complex combination in order to break and drop the shift operation device 1 as desired when the passenger hits against the select lever 9.

The present invention is for solving problems included in the conventional structure for mounting the shift operation device 1 on a vehicle body described above.

### SUMMARY OF THE INVENTION

It is a primary object of the present invention to provide a structure for mounting a shift operation device on a vehicle body wherein the structure allows the shift operation device to break away not only in a case where a passenger hits against a select lever of the shift operation device but also in the case where the passenger hits against the instrument panel covering the shift operation device, thereby absorbing and reducing an impact load of a secondary crash to be applied to the passenger, and further facilitating an adequate load factor for breaking and dropping the shift operation device.

To accomplish the above object, according to a first aspect of the present invention, there is provided a structure for mounting a shift operation device on the vehicle body, comprising a support member having a main part to be fixed on the vehicle body and a molded plastic part to support the shift operation device which is dropped downwardly with the shift operation device when a larger load than that of a predetermined value is applied to the main part. Additionally, the main part and the molded plastic part are integrally formed into a single piece configuration, and the shift operation device is mounted on the vehicle body via the support member so that the larger load can break and drop the shift operation device.

According to a second aspect of the present invention, the main part is sandwiched on a front and a back thereof by the molded plastic part.

According to a third aspect of the present invention, the main part comprises a notch for inserting a mounting member for mounting the support member on the shift operation device downwardly, and an opening with a predetermined diameter disposed at both sides of the notch. Additionally, a synthetic resin is filled in the notch and the opening when the molded plastic part is formed, and the synthetic resin filled in the opening breaks away when the large load is applied to the support member.

According to a fourth aspect of the present invention, a projection projecting into the notch is integrally formed at a portion of the main part around the notch.

According to a fifth aspect of the present invention, at least one of the openings is a hollow member when filled with the synthetic resin, and a positioning pin projecting from a side wall of the shift operation device is inserted into the hollow member. Additionally, the positioning pin inserted into the hollow member breaks away when the larger load is applied to the support member.

### BRIEF DESCRIPTION OF DRAWINGS

These and other objects and advantages of the present invention will become understood from the following description with reference to accompanying drawings, wherein:
FIG. 1 illustrates a whole structure for mounting a shift operation device on a vehicle body according to the present invention;
FIG. 2 shows an exploded view for illustrating an inside structure of the shift operation device according to the same example;
FIG. 3 shows a front view of a support member connected to a case lower;
FIG. 4A shows a sectional view taken along A-A line in FIG. 3;
FIG. 4B shows the sectional view taken along B - B line in FIG. 3;
FIG. 4C shows a sectional view taken along C-C line in FIG. 3;
FIG. 5 shows an exploded view of the support member according to the same example;
FIG. 6 shows the front view of a support member different from the above example;
FIG. 7 shows a side view corresponding to FIG. 6;
FIG. 8 illustrates a conventional structure for mounting a shift operation device on a vehicle body;
FIG. 9A shows a perspective view for illustrating a support structure according to the same example; and
FIG. 9B illustrates an operation corresponding to the same example.

### DESCRIPTION OF THE PREFERRED EMBODIMENT

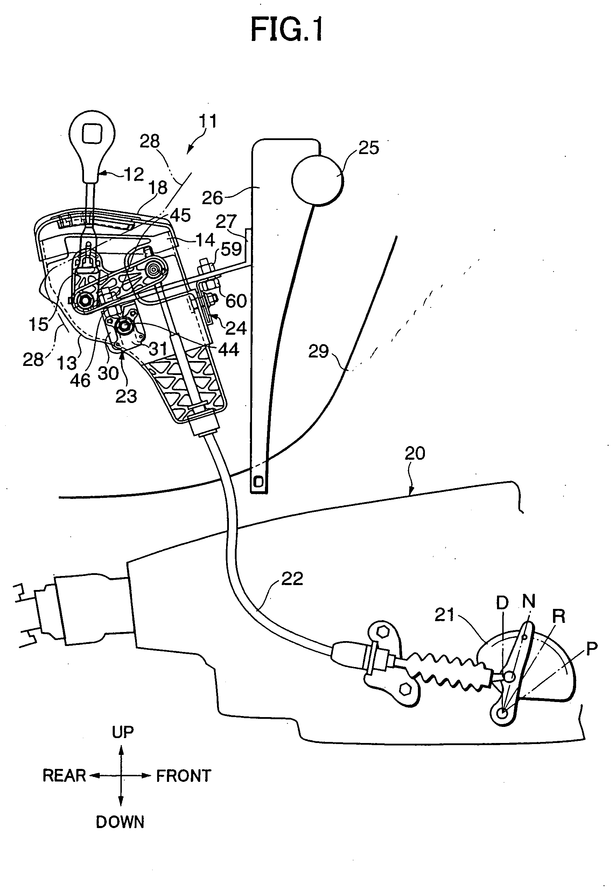

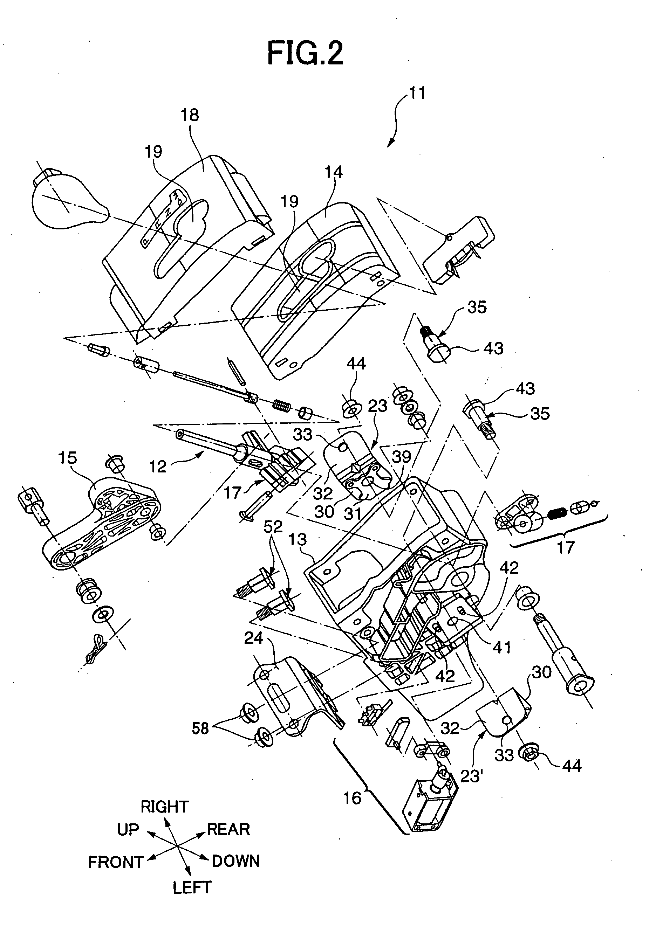

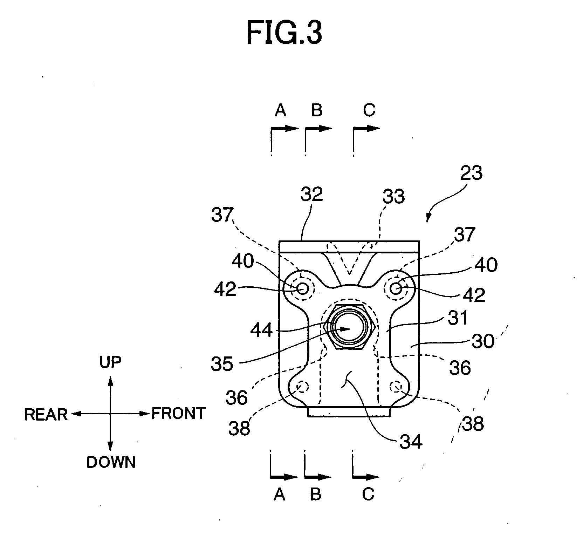

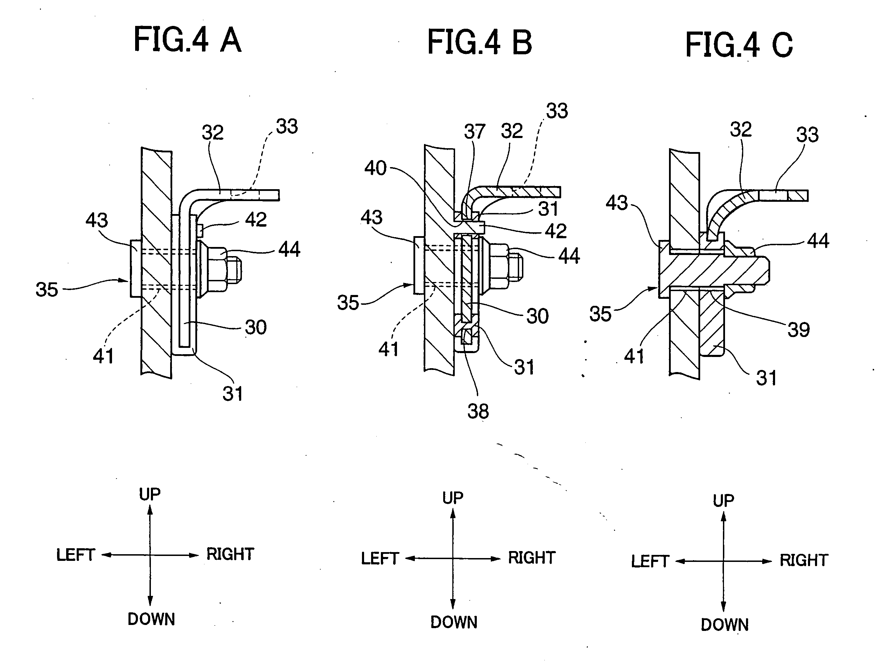

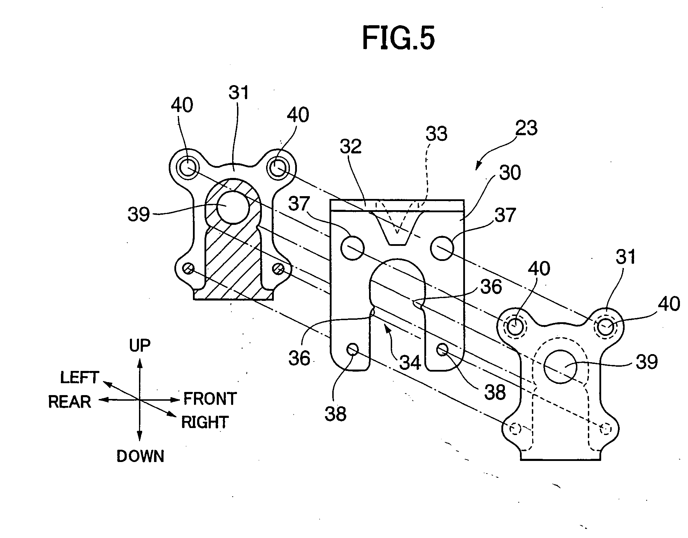

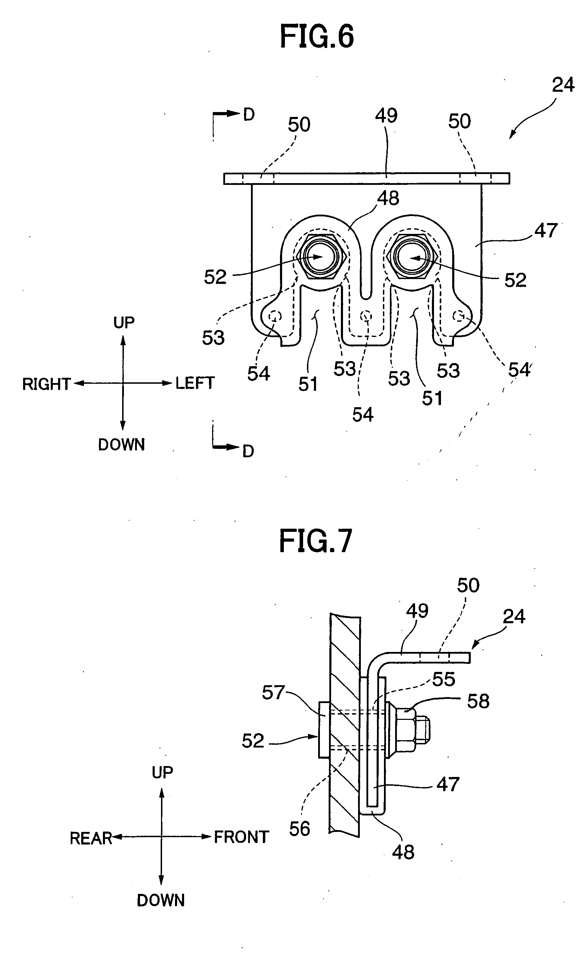

The preferred embodiment of the present invention, presently considered to be the best mode, is hereinafter described in details with reference to FIGS. 1-7. FIG. 1 illustrates a whole structure for mounting a shift operation device on a vehicle body according to the present invention. FIG. 2 shows an exploded view for illustrating an inside structure of the shift operation device according to the same example. FIG. 3 shows a front view of a support member connected to a case lower. FIGS. 4A, 4B and 4C show sectional views taken along A - A, B - B and C-C lines, respectively, in FIG. 3. FIG. 5 shows an exploded view of the support member according to the same example. FIG. 6 shows a front view of a support member different from the above example. FIG. 7 shows a side view corresponding to FIG. 6.

As shown in FIGS. 1 and 2, a shift operation device 11 mainly comprises a select lever 12, a case lower 13, and a case upper 14, and further comprises a tip shift mechanism for switching an automatic transmission (hereinafter referred to as A/T) or a manual mode to each other by moving the select lever 12 in the lateral direction, i.e., the direction perpendicular to the surface of the document in FIG. 1. The case lower 13, as a connecting member of the select lever 12, is formed into a box-like shape opening at the top, and is provided with a link member 15, a shift lock mechanism 16 used for selection, an accent mechanism 17, and a mechanism for avoiding misoperations. The case upper 14 and indicator 18, as a lid member of the case lower 13, are provided with a selection slot 19 corresponding to each range. A link member 15, which operates in a predetermined pattern according to a lever operation along a part of a selection slot 19 corresponding to the A/T mode, pushes and pulls a selection cable 22 connected to an arm 61 of an inhibitor (range) switch 21 in an automatic transmission 20, thereby automatically controlling the automatic transmission 20. The shift operation device 11 is mounted such that a top portion thereof protrudes from the instrument panel 28 beside a steering column toward the passenger compartment. More specifically, support members 23, 23' and 24 are bolted to a second mounting bracket 27. The support members 23, 23' and 24 are bolted to the right and left walls and the front wall of the case lower 13, respectively. The second mounting bracket 27 extends from a first mounting bracket 26 toward the passenger compartment (backward). The first mounting bracket 26 is fixed to a laterally extending support beam 25 at the top end portion of the bracket 26. It should be noted that the number 29 in Fig. 1 indicates a floor tunnel to which a bottom end portion of the first mounting bracket 26 is fixed.

Because the respective supporting members 23 and 23' fixed to the right and left walls of the case lower 13 have the same structure, a description is hereinafter made on the supporting member 23 fixed to the right wall of the case lower 13.

As shown in FIGS. 2-5, the support member 23 comprises a main part 30, and a molded plastic part 31. The main part 30 is bent into a form having a gate shape in the front view and an L shape in the side view, and is sandwiched on both sides thereof by the molded plastic part 31.

The main part 30, as a plate extending vertically, is provided with a contact surface part 32 extending horizontally at the top end of the main part 30 by bending. A hole 33 with a predetermined diameter for inserting a bolt is formed through the contact surface part 32. A bent portion between the main part 30 and the contact surface part 32 is ribbed in order to increase a supporting rigidity.

Further, in the main part 30, formed is a notch 34 with a half arch shape from a bottom end portion to a center portion of the main part 30. A bolt 35 with a step for mounting the support member 23 on the case lower 13 is inserted into an upper portion of the notch 34. A pair of projections 36, 36 opposing to each other to a certain extent are integrally formed near the inserted bolt 35. There are formed two pairs of circular holes 37, 37; 38, 38 in the main part 30, each pair being bilaterally symmetrical and each formed with a predetermined diameter at areas around the notch 34.

The molded plastic part 31, which substantially covers the both sides (front and back) of the main part 30, is integrally molded by a synthetic resin material. The notch 34, the holes 37, 37; 38, 38 are filled with the synthetic resin at the molding. There is formed a hole 39 with a predetermined diameter, into which the step bolt 35 is inserted, substantially at the center of the molded plastic part 31. Insertion holes 40 and 40 with a predetermined diameter are formed through portions located in areas where the respective holes 37 and 37 are filled.

A precise shape, thickness, and a load-resistant strength of the molded plastic part 31 are decided in such a way that the synthetic resin filled in the holes 37, 37; 38, 38 breaks down when a larger impact load than that of a predetermined value is applied to the select lever 12 or the instrument panel 28 adjacent to the shift operation device 11 and thus when a downward load is applied via the step bolt 35.

A hole 41 with a predetermined diameter corresponding to the bolt 35 is formed through the right wall of the case lower 13. It should be noted that another hole 41 is shown on the left wall of the case lower 13 in FIG. 2. A pair of positioning pins 42, 42 are integrally formed on the right wall of the case lower 13 above the hole 41 such that the positioning pins 42, 42 project outward from the wall. The positioning pins 42, 42 facilitate to position the support member 23 when secured to the case lower 13. Moreover, the diameter and the resistant strength of the positioning pins 42, 42 are decided such that the larger impact than that of the predetermined value applied to the selection lever 12 or the instrument panel 28 adjacent to the shift operation device 11 can cause shearing force against the support member 23 to break the positioning pins 42, 42 when the case lower 13 is fixed to the vehicle body via the support member 23. It should be noted that there is formed a locking part (not shown) on the inside surface of the case lower 13 corresponding to the hole 41. The locking part engages with the bolt head 43 of the step bolt 35 to lock a rotation of the bolt 35.

It should be noted that the positioning pins 42, 42, which are formed on the case lower 13, may be integrally formed on the support member 23, while the insertion holes 40 and 40 into which the respective positioning pins 42, 42 are inserted may be formed at the lower case 13.

The support member 23 is secured between the right wall of the case lower 13 and the second mounting bracket 27 such that the front of the support member 23 is oriented rightwardly. That is, the back of the molded plastic part 31 of the support member 23 is disposed so as to be opposed to the right wall of the case lower 13, the positioning pins 42, 42 are inserted into the insertion holes 40 and 40, and the step bolt 35 projecting outwardly from the hole 41 is inserted into the hole 39 of the support member 23 and then the corresponding nut 44 is tightened with a predetermined tightening torque. Then, as shown in FIG. 1, the support member 23 is fixed to the vehicle body using the bolt 46, which is inserted into a hole 33 for the bolt 35 and screwed into a nut 45, with the top face of the contact surface part 32 being in contact with the bottom surface of the second mounting bracket 27.

The support member 23', having the same structure as this support member 23, is secured to the case lower 13 on the left wall thereof in a similar way.

The support member 24 to be secured to the front wall of the case lower 13 may be secured to the case lower 13 using the same structural member as that of the support member 23 or 23' described above. Instead of this configuration, the following modifications on the detailed structure may be made in order to acquire a desired shape at amounting position and to ensure supporting rigidity.

That is, as shown in FIGS. 6 and 7, the support member 24 comprises a main part 47 wider than those of the support members 23 and 23', and a molded plastic part 48. The main part 47 is a metal plate member that is bent into a form having a gate shape in parallel in the front view and an L shape in the side view, and is sandwiched on both sides thereof by the molded plastic part 48.

The main part 47, as a plate extending vertically, is provided with the contact surface part 49 extending horizontally at the top end of the main part 47 by bending. Holes 50 and 50, each having a predetermined diameter corresponding to the bolt 35, are formed through the contact surface part 49 at a predetermined interval. Thus, support rigidity for bolting the support member 24 to the second mounting bracket 27 is secured. Although there is no necessity of rib for securing rigidity of the bent portion between the main part 47 and the contact surface part 49, reinforcement means such as ribbing and beading may be adopted as required.

Further, in the main part 47, notches 51 and 51 each having a half arch shape formed from a bottom end portion to a center portion of the main part 47, are formed in parallel. Step bolts 52 and 52 for mounting the support member 24 on the case lower 13, are inserted into upper portions of the respective notches 51 and 51. A pair of projections 53, 53 are integrally formed with the main part 47 near each inserted step bolt 52. There are formed three holes 54 with a predetermined diameter at the bottom end portion of the main part 47. These areas are to be sandwiched in the molded plastic.

The molded plastic part 48, which substantially covers peripheries of the notches 51 and 51, is integrally molded by a synthetic resin on both sides of the main part 47. While the holes 54 are filled with the synthetic resin at the molding, bottom portions of the notches 51 and 51 are not covered with the molded plastic part 48. There are formed holes 55 and 55 with predetermined diameters, into which the respective step bolts 52 and 52 are inserted, at upper portions of the molded plastic part 48. It should be noted that only one of the holes 55 and 55 is shown in FIG. 7.

A precise shape, thickness, and a load-resistant strength of the molded plastic part 48 are decided such that the synthetic resin filled in the holes 54 breaks down when a larger impact load than that of a predetermined value is applied to the select lever 12 or the instrument panel 28 adjacent to the shift operation device 11 and thus when a downward load is applied via the step bolts 52 and 52.

Two holes 56 with the predetermined diameters corresponding to the bolts 52 are formed through the front wall of the case lower 13. It should be noted that only one of the holes 56 is shown in FIG. 7. There are formed locking parts (not shown) on the inside surface of the case lower 13 corresponding to the respective holes 56. The locking part engages with the bolt head 57 of the step bolt 52 to lock the rotation of the bolt 52.

The support member 24 is secured in the space formed between the front wall of the case lower 13 and the second mounting bracket 27 such that the front of the support member 24 faces forward. That is, the back of the molded plastic part 48 of the support member 24 is disposed so as to be opposed to the front wall of the case lower 13, and the step bolts 52 and 52 projecting outwardly from the holes 56 and 56 are inserted into the holes 55 and 55 of the support member 24 and then respective nuts 58 and 58 are tightened with the predetermined tightening torque. Then, as shown in FIG. 1, the support member 24 is fixed to the vehicle body using bolts 60, which are inserted into holes 50 and 50 and screwed into respective nuts 59, with the top face of the contact surface part 49 being in contact with the bottom surface of the second mounting bracket 27.

As described above, according to this structure for mounting the shift operation device on the vehicle body, the shift operation device 11 is mounted on the vehicle body via the support members 23, 23' and 24 bolted to the left, right and front sides of the device 11, with the top portion of the device 11 projecting from the instrument panel 28 beside the steering column toward the passenger compartment. These support members 23, 23', 24 are compact, since they are made by molding the main parts with the molded plastic part 31. The compact configuration can increase a flexibility in a layout design thereof.

Then, the load applied to the shift operation device 11 and the select lever 12 during lever operations or driving of the vehicle, is further applied to the support members 23 and 23' on the right and left walls of the case lower 13 via the right and left step bolts 35 and the positioning pins 42, 42, and to the support member 24 on the front wall of the case lower 13 via the step bolts 52 and 52. The load is applied almost evenly to the above mentioned portions, thereby distributed and absorbed efficiently. Moreover, the projections 36 and 36 are formed at each notch 34 of the support members 23 and 23', and the projections 53 and 53 are formed at each notch 51 of the support member 24. The notches reinforce the molded plastic parts 31 and 48 around the holes 39 and 55, thereby preventing the plastic from breaking when a downward load is applied via the right and left step bolts 35 and the front step bolts 52 and 52. Furthermore, these projections 36, 36; 53, 53 prevent the molded plastic parts 31 and 48 around the holes 39 and 55 from breaking away even in the case where a resistant force of the molded plastic parts 31 and 48 decreases due to repeated loads or deterioration with time if the impact load is within the predetermined value. These characteristics,prevent the shift operation device 11 from breaking from the vehicle body in the normal condition of the vehicle, and improve the mounting accuracy.

In case of a vehicle crash, a passenger may be bounced forwardly, and the larger impact load than that of the predetermined value may be applied to the select lever 12 or the instrument panel 28 adjacent to the shift operation device 11, thereby causing shearing force on the right and left step bolts 35 and positioning pins 42, 42 against the support members 23 and 23'. The shearing force breaks the positioning pins 42, 42, and the plastic filled in the holes 37, 37; 38, 38. Thus, the molded plastic part 31 moves downwardly along the notch 34, breaking away from the main part 30, with the bolt 35 remaining tightened. Even if the load is concentrated on a portion around the hole 39 under the bolt 35, the projections 36 and 36 reinforce the molded plastic part 31 around the hole 39, thereby preventing the molded plastic part 31 filled in the notch 34 from tearing.

Meanwhile, the shearing force occurs on the step bolts 52 and 52 against the support member 24, thereby breaking the plastic filled in the holes 54. Thus, the molded plastic part 48 moves downwardly along the notches 51 and 51, breaking away from the main part 47, with the bolts 52 and 52 remaining tightened. Even if the load is concentrated on the portions around the holes 55 and 55 under the bolts 52 and 52, the projections 53 and 53 reinforce the molded plastic part 48 around the holes 55 and 55, thereby preventing the molded plastic part 48 filled in the notches 51 and 51 from tearing.

These characteristics serve to quickly absorb and reduce the impact load, with the shift operation device 11 breaking away and falling under the instrument panel 28, thereby significantly reducing the impact load of a secondary crash to be applied to the passenger.

In such a manner, the shift operation device 11 can break and drop down when the higher impact load than that of the predetermined value is applied to the select lever 12 and the instrument panel 28 near the shift operation device 11. In order to adequately drop down the operation device 11, each diameter and each resistant force of the positioning pins 42, 42, which are formed on the right and left walls of the case lower 13, are previously set as well as each proper shape of the holes 37, 37; 38, 38; 54, 54 and each resistant strength of the synthetic resin filled within the holes 37,37; 38,38; 54,54.

This feature helps to break and drop the shift operation device 11, and enables the shift operation device 11 to break away from the vehicle body with reliability and in an optimum way.

As described above, the structure for mounting a shift operation device on a vehicle body according to the present invention allows the shift operation device to break away not only in the case where the passenger hits against the select lever of the shift operation device but also in the case the passenger hits against the instrument panel covering the shift operation device, thereby absorbing and reducing the impact load of the secondary crash to be applied to the passenger, and moreover providing an optimum design of a breaking load of the shift operation device.

## Claims

1. A structure for mounting a shift operation device on a vehicle body, comprising:
- a support member (23, 24) having a first part (30) to be fixed to the vehicle body, and a second part (31) to support the shift operation device (11) so as to be dropped downwardly with the shift operation device (11) when a load larger than that of a predetermined value is applied to the first part (30),
- wherein the first and second parts (30, 31) are integrally formed into a single component,
wherein the shift operation device (11) is mounted to the vehicle body via the support member (23, 24) so that a load larger than that of the predetermined value can break and drop the shift operation device (11).

2. The structure according to claim 1,
wherein the first part (30) is sandwiched on a front and a rear side thereof by the second part (31).

3. The structure according to claim 2,
wherein the first part (30) comprises:
- a notch (34, 51) for downwardly inserting a mounting member for mounting the support member (23, 24) on the shift operation device (11); and
- openings (37, 38) with a predetermined diameter disposed at both sides of the notch (34, 51),
- wherein a plastic material is filled in the notch (34, 51) and the openings (37, 38), and
- wherein the plastic material filled in the openings (37, 38) breaks away when a load larger than that of the predetermined value is applied to the support member (23, 24).

4. The structure according to claim 3,
wherein a projection (36), inserted into the notch (34, 51), is integrally formed at a portion of the first part (30) around the notch (34, 51).

5. The structure according to claim 3 or 4,
wherein at least one of the openings (37, 38) has a hollow opening for filling with the plastic material,
wherein a positioning pin (42) projecting from a side wall of the shift operation device (11) is inserted into the hollow opening, and
wherein the positioning pin (42) inserted into the hollow opening breaks away when a load larger than that of the predetermined value is applied to the support member (23, 24).

6. The structure according to any of claims 3 to 5,
wherein the second part (31) is formed with a molded plastic; and
wherein the plastic material, used when the second part (31) is formed, is filled in the notch (34 ,51) and the opening (37, 38).
